# EUROPEAN PATENT APPLICATION

(11) **EP 2 556 998 A1**
(43) Date of publication of application: **13.02.2013**
(21) Application number: 11765904.5
(22) Date of filing: 05.04.2011
(51) Int. Cl.: B60R 16/02, G06F 11/00, G06F 13/00

(54) **VEHICLE CONTROL DEVICE AND PROGRAM REWRITE METHOD**

(30) Priority: 07.04.2010 JP 2010088811; 07.04.2010 JP 2010088810
(71) Applicant: Keihin Corporation, Shinjuku-ku, Tokyo 163-0539 (JP)
(72) Inventor: TASHIRO Yuuki, Shioya-gun Tochigi 329-1233 (JP)
(74) Representative: Ilgart, Jean-Christophe
(86) International application number: PCT/JP2011/058602
(87) International publication number: WO 2011/126004

(57) **Abstract**

A vehicle control device communicably connectable to a plurality of types of external rewrite devices using different communication protocols includes a storage unit configured to store a control program, and a control unit configured to perform rewriting of the control program according to a rewrite command received from the external rewrite device communicably connected to its own device, wherein, every time the rewrite command is received, the control unit determines a type of the external rewrite device communicably connected to its own device based on header information of the received rewrite command.

## Description

### TECHNICAL FIELD

The present invention relates to a vehicle control device and a program rewrite method.
Priority is claimed on Japanese Patent Application Nos. 2010-088810 and 2010-088811, filed on April 7, 2010, the entire contents of which are incorporated herein by reference.

### BACKGROUND ART

A control program is stored in a vehicle control device such as an electronic control unit (ECU). In the following Patent Document 1, technology in which a control program is rewritable in a state in which the vehicle control device is mounted on a vehicle is disclosed.

### [Documents of the prior art]

### [Patent Document]

Patent Document 1: Japanese Unexamined Patent Application, First Publication No. 2009-123226

### DISCLOSURE OF INVENTION

### Problems to be solved by the invention

In the related art, a dedicated external rewrite device (rewrite device) for development of the vehicle control device uses the control program stored in the vehicle control device such as the ECU. Because the rewrite device for development is created on the condition that the rewrite device for development is used only for a vehicle development site, it may be impossible to use the rewrite device for development in a place other than the vehicle development site.
However, electronic control of a car has recently become complicated. Accordingly, it is not possible to ignore the possibility that a car equipped with an ECU having an erroneous control program might be provided on the market. Thus, a rewrite device for market by which the control program is rewritable to a control device mounted on a car provided on the market has been introduced.

However, communication protocols to be used in the rewrite device for development and the rewrite device for market are not necessarily consistent. In the near future, it is assumed that it will be necessary to rewrite the control program by any rewrite device of the rewrite device for development and the rewrite device for market. In this case, it may be necessary to perform the determination of a communication protocol (that is, the determination of a type of rewrite device) at an ECU side.
It is not possible to cope with the case in which a communication protocol is different between the rewrite device for development and the rewrite device for market because only a rewrite method using a single communication protocol is considered in rewriting of the control program using only the technology of the above-described Patent Document 1 or the rewrite device for development of the related art.

The present invention has been made in view of the above-described circumstances, and an object of the invention is to provide a vehicle control device and a program rewrite method, which can cope with a plurality of types of external rewrite devices, the communication protocols of which are different from each other. Means for solving problems

In order to solve the above-described problem, the present invention has adopted the following content. (1) In an aspect of the present invention for solving the above-described problem, as a first solution according to a vehicle control device, there is provided a vehicle control device communicably connectable to a plurality of types of external rewrite devices using different communication protocols, including: a storage unit configured to store a control program; and a control unit configured to perform rewriting of the control program according to a rewrite command received from the external rewrite device communicably connected to its own device, wherein, every time the rewrite command is received, the control unit determines a type of the external rewrite device communicably connected to its own device based on header information of the received rewrite command.

(2) As a second solution according to the vehicle control device disclosed in the above-described (1), in the above-described first solution, the storage unit stores the communication protocol corresponding to each of the plurality of types of external rewrite devices, and the control unit performs communication with the external rewrite device communicably connected to its own device and rewriting of the control program corresponding to the rewrite command using the communication protocol corresponding to the type of the external rewrite device determined based on the header information of the rewrite command among the communication protocols stored in the storage unit.

(3) In another aspect of the present invention, as a first solution according to a program rewrite method, there is provided a program rewrite method of rewriting a control program of a vehicle control device by transmitting a rewrite command from one of a plurality of types of external rewrite devices using different communication protocols to the vehicle control device, wherein, every time the rewrite command is received, the vehicle control device determines a type of the external rewrite device communicably connected to its own device based on header information of the received rewrite command.

(4) As a second solution according to the program rewrite method disclosed in the above-described (3), in the above-described first solution, the vehicle control device stores the communication protocol corresponding to each of the plurality of types of external rewrite devices, and performs communication with the external rewrite device communicably connected to its own device and rewriting of the control program corresponding to the rewrite command using the communication protocol corresponding to the type of the external rewrite device determined based on the header information of the rewrite command.

(5) As a first solution according to a vehicle control device, there is provided a vehicle control device communicably connectable to a plurality of types of external rewrite devices using different communication protocols, including: a storage unit configured to store a control program; and a control unit configured to perform rewriting of the control program according to a rewrite command received from the external rewrite device communicably connected to its own device, wherein the control unit determines a type of the external rewrite device communicably connected to its own device based on a rewrite command which a protocol has initially been determined, and then accepts only a rewrite command from the determined external rewrite device.

(6) As a second solution according to the vehicle control device disclosed in the above-described (5), in the above-described first solution, the storage unit stores the communication protocol corresponding to each of the plurality of types of external rewrite devices, and the control unit performs communication with the external rewrite device communicably connected to its own device and rewriting of the control program corresponding to the rewrite command using the communication protocol corresponding to the type of the external rewrite device determined based on the rewrite command which a protocol has initially been determined among the communication protocols stored in the storage unit.

(7) In the present invention, as a first solution according to a program rewrite method, there is provided a program rewrite method of rewriting a control program of a vehicle control device by transmitting a rewrite command from one of a plurality of types of external rewrite devices using different communication protocols to the vehicle control device, wherein the vehicle control device determines a type of the external rewrite device communicably connected to its own device based on a rewrite command which a protocol has initially been determined, and then accepts only a rewrite command from the determined external rewrite device.

(8) As a second solution according to the program rewrite method in the present invention, in the above-described first solution, the vehicle control device stores the communication protocol corresponding to each of the plurality of types of external rewrite devices, and further performs communication with the external rewrite device communicably connected to its own device and rewriting of the control program corresponding to the rewrite command using the communication protocol corresponding to the type of the external rewrite device determined based on the rewrite command of the protocol that has been initially determined.

### [Advantageous Effects of Invention]

According to the vehicle control device in accordance with the aspect disclosed in the above-described (1), it is possible to determine the type of external rewrite device connected to its own device even in a situation in which the plurality of types of external rewrite devices using the different communication protocols coexist.

In accordance with the aspect disclosed in the above-described (2), in addition to the advantageous effect of the above-described (1), the vehicle control device can determine the type of external rewrite device connected to its own device and perform the communication with the external rewrite device and the rewriting of the control program using the communication protocol corresponding to the determined type of device.
In accordance with the aspects disclosed in the above-described (3) and (4), it is possible to provide a vehicle control device and a program rewrite method capable of also coping with a situation in which a plurality of types of external rewrite devices using different communication protocols coexist.

According to the vehicle control device disclosed in the above-described (5), it is possible to determine the type of external rewrite device connected to its own device and then accept only the rewrite command from the determined external rewrite device even in a situation in which the plurality of types of external rewrite devices using the different communication protocols coexist.

According to the vehicle control device disclosed in the above-described (6), it is possible to determine the type of external rewrite device connected to its own device and perform the communication with the external rewrite device and the rewriting of the control program using the communication protocol corresponding to the determined type of device.
According to the program rewrite method disclosed in the above-described (7) and (8), it is possible to provide a vehicle control device and a program rewrite method capable of also coping with a situation in which a plurality of types of external rewrite devices using different communication protocols coexist.

### Brief Description of Drawings

FIG. 1 is a block configuration diagram of an ECU 1 in accordance with an embodiment of the present invention.
FIG. 2 is a flowchart illustrating a command determination process that is executed when a central processing unit (CPU) 1d rewrites a control program.
FIG. 3 is a diagram illustrating an example of data content of rewrite commands that are transmitted from rewrite device A for development and rewrite device B for market.
FIG. 4A is a flowchart illustrating a command determination process that is executed when the CPU 1d rewrites the control program.
FIG. 4B is a flowchart illustrating a first reception command division process that is executed when the CPU 1d rewrites the control program.
FIG. 5 is a diagram illustrating an example of data content of rewrite commands that are transmitted from rewrite device A for development and rewrite device B for market.
FIG. 6 is a flowchart illustrating a command determination process in accordance with a modified example.
FIG. 7 is a flowchart illustrating a command determination process in accordance with a modified example.
FIG. 8 is a flowchart illustrating a first reception command division process included in the command determination process in accordance with a modified example.

### Description of Embodiments

Hereinafter, embodiments of the present invention will be described with reference to the drawings.

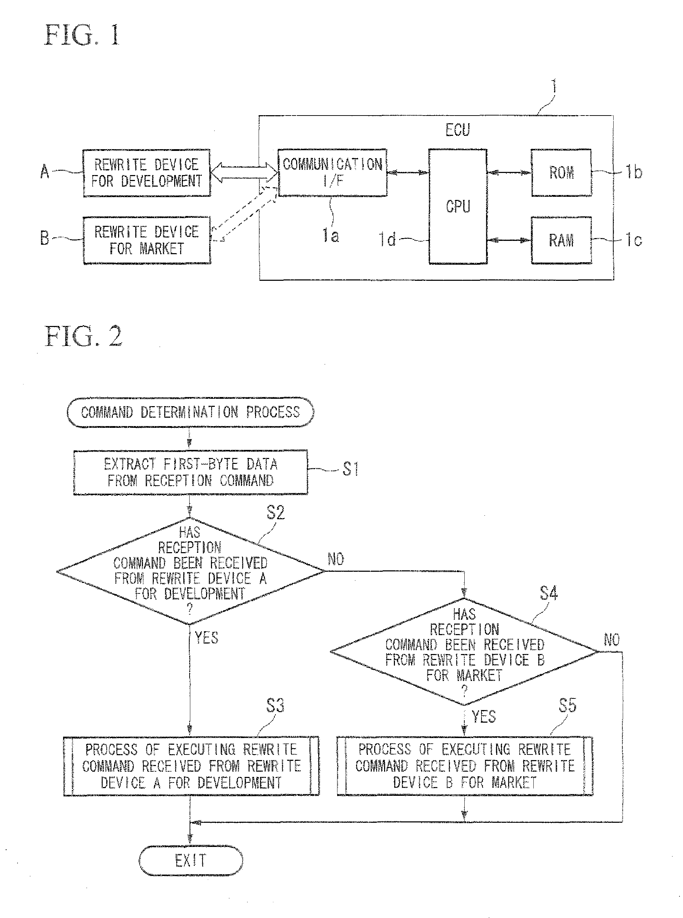

FIG. 1 is a block configuration diagram of a vehicle control unit (hereinafter referred to as an "ECU") 1 in accordance with the embodiment of the present invention.
As illustrated in FIG. 1, the ECU 1 in accordance with this embodiment is communicably connectable to two types of external rewrite devices (rewrite device A for development and rewrite device B for market) using different communication protocols. A communication interface (I/F) 1a, a read only memory (ROM) 1b, a random access memory (RAM) 1c, and a central processing unit (CPU) 1d are embedded in the ECU 1.

The communication I/F 1a is a communication interface connectable to rewrite device A for development or rewrite device B for market via a communication link (not illustrated). Under control by the CPU 1d, the communication I/F 1a performs data communication between rewrite device A for development or rewrite device B for market and the ECU 1.
Although a state in which rewrite device A for development has been connected to the communication I/F 1a is illustrated in FIG. 1, rewrite device B for market may be connected instead of rewrite device A for development.

The ROM 1b (a storage unit) is a rewritable nonvolatile memory pre-storing a control program for implementing a vehicle control function of the CPU 1d, a communication protocol corresponding to each of rewrite device A for development and rewrite device B for market, and the like.
The RAM 1c is a volatile working memory to be used for a temporary storage destination of data when the CPU 1d executes various processes according to the control program.

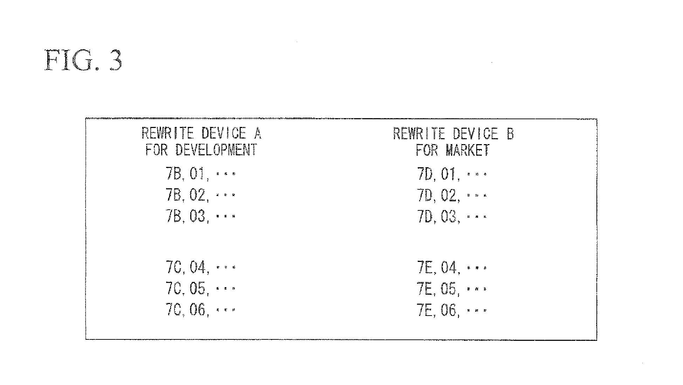

The CPU 1d (a control unit) is a central processing unit which executes various processes necessary for vehicle control according to the control program stored in the ROM 1b.
In addition, this CPU 1d also has a function of rewriting the control program stored in the ROM 1b according to a rewrite command received from rewrite device A for development or rewrite device B for market communicably connected to its own device (the ECU 1).
Hereinafter, the function of rewriting the control program provided in this CPU 1d will be described in detail with reference to FIGS. 2 and 3.

FIG. 2 is a flowchart illustrating a command determination process that is executed when the CPU 1d rewrites the control program.
As illustrated in FIG. 2, if the CPU 1d receives a rewrite command from rewrite device A for development or rewrite device B for market via the communication I/F 1a (at this time, it is not possible to determine which rewrite device is connected), first-byte data of a header is extracted as header information from the received rewrite command (step S1).

FIG. 3 is a diagram illustrating an example of data content of rewrite commands that are transmitted from rewrite device A for development and rewrite device B for market.
As illustrated in FIG. 3, first-byte data of a header of the rewrite command that is transmitted from rewrite device A for development becomes "7B" or "7C." On the other hand, first-byte data of a header of the rewrite command that is transmitted from rewrite device B for market becomes "7D" or "7E."
Accordingly, it is possible to determine a type of rewrite device (rewrite device A for development or rewrite device B for market) connected to the ECU 1 by checking the first-byte data of the header of the received rewrite command.
As described above, the vehicle control device communicably connectable to a plurality of types of external rewrite devices using different communication protocols includes the storage unit configured to store a control program, and the control unit configured to perform rewriting of the control program according to a rewrite command received from the external rewrite device communicably connected to its own device, wherein, every time the rewrite command is received, the control unit can determine a type of the external rewrite device communicably connected to its own device based on header information of the received rewrite command.
In addition, as illustrated in FIG. 3, the storage unit stores the communication protocol corresponding to each of the plurality of types of external rewrite devices. Thereby, the control unit can perform communication with the external rewrite device communicably connected to its own device and rewriting of the control program according to the rewrite command using the communication protocol corresponding to the type of the external rewrite device determined based on the header information of the rewrite command among the communication protocols stored in the storage unit.

In FIG. 2, the CPU 1d determines whether or not the reception command has been received from rewrite device A for development (whether or not a type of rewrite device communicably connected to its own device is rewrite device A for development) based on the data extracted in the above-described step S1 (step S2).
In the case of "Yes" in step S2, that is, when it is determined that rewrite device A for development is connected to the ECU 1, the CPU 1d executes communication with rewrite device A for development (return of a response to the command or the like) and a process of rewriting a control program according to the rewrite command using a communication protocol corresponding to rewrite device A for development (step S3).

On the other hand, in the case of "No" in the above-described step S2, the CPU 1d determines whether or not the reception command has been received from rewrite device B for market (whether or not the type of rewrite device communicably connected to its own device is rewrite device B for market) based on the data extracted in the above-described step S1 (step S4).
In the case of "Yes" in step S4, that is, when it is determined that rewrite device B for market is connected to the ECU 1, the CPU 1d executes communication with rewrite device B for market (return of a response to the command or the like) and a process of rewriting a control program according to the rewrite command using a communication protocol corresponding to rewrite device B for market (step S5).
As described above, the vehicle control device communicably connectable to a plurality of types of external rewrite devices using different communication protocols includes the storage unit configured to store a control program, and the control unit configured to perform rewriting of the control program according to a rewrite command received from the external rewrite device communicably connected to its own device, wherein the control unit can determine a type of the external rewrite device communicably connected to its own device based on a rewrite command which a protocol has initially been determined, and then accept only a rewrite command from the determined external rewrite device.

On the other hand, in the case of "No" in the above-described step S4, that is, when it is determined that a type of rewrite device communicably connected to its own device does not correspond to any of rewrite device A for development and rewrite device B for market, the CPU 1d ends the command determination process without performing a process of rewriting the control program.
Every time the rewrite command is received via the communication I/F 1a, the CPU 1d executes the processes of the above-described steps S1 to S4.

In addition, although an example in which it is determined whether or not the reception command has been received from rewrite device A for development in step S2 of FIG. 2 and it is determined whether or not the reception command has been received from rewrite device B for market in step S4 has been described in the above-described embodiment, the contents of these steps may be switched.
That is, it may be determined whether or not the reception command has been received from rewrite device B for market in step S2 of FIG. 2 and it may be determined whether or not the reception command has been received from rewrite device A for development in step S4.
Of course, in this case, it is also necessary to switch the content of steps S3 and S5.

As described above, according to the ECU 1 in accordance with this embodiment, it is possible to perform the determination of the type of rewrite device connected to its own device (the determination of a communication protocol) and then accept only a rewrite command from the determined external rewrite device. Thus, it is possible to cope with a situation in which rewrite device A for development and rewrite device B for market using different communication protocols coexist.

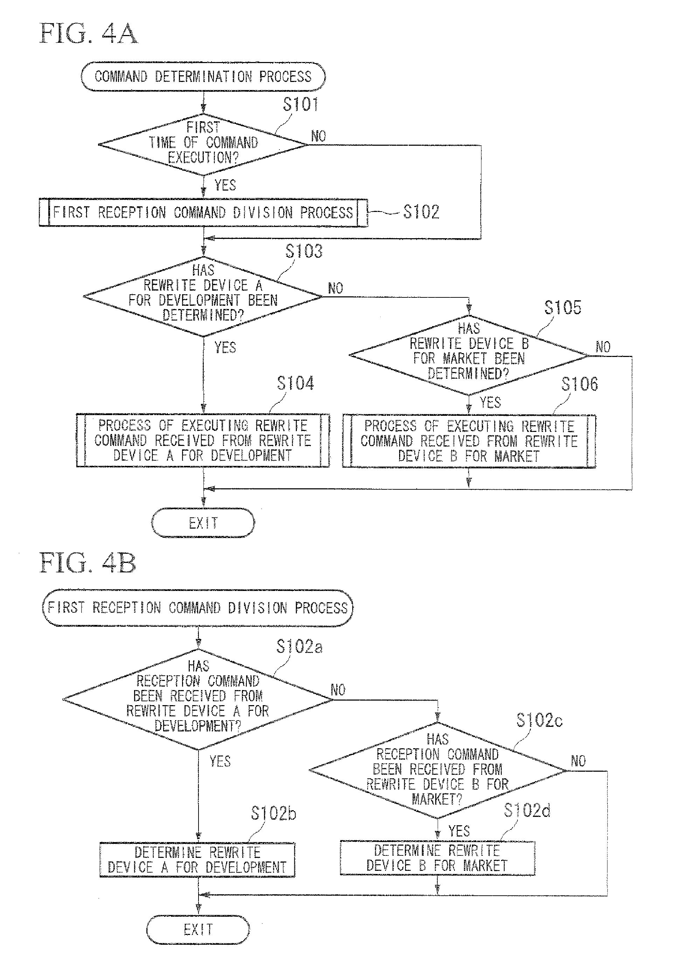

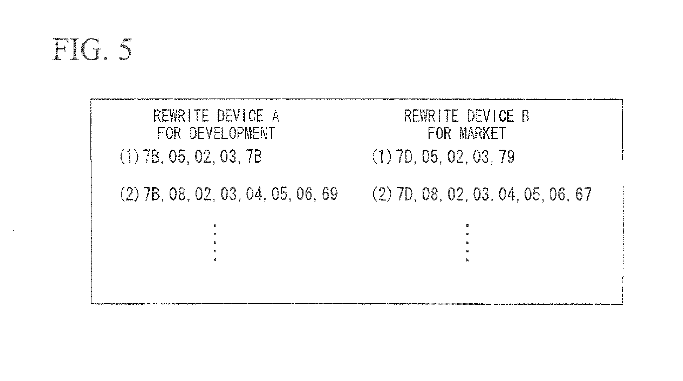

Further, a function of rewriting the control program provided in the CPU 1d in another embodiment will be described.
Hereinafter, the function of rewriting the control program provided in this CPU 1d will be described in detail with reference to FIGS. 4A, 4B, and 5.

FIG. 4A is a flowchart illustrating a command determination process that is executed when the CPU 1d rewrites the control program.
As illustrated in FIG. 4A, the CPU 1d determines whether or not the current time is the first time of command execution upon receipt of a rewrite command from rewrite device A for development or rewrite device B for market via the communication I/F 1a (at this time, it is not possible to determine which rewrite device is connected) (step S101).

In the case of "No" in the above-described step S101, the CPU 1d proceeds to step S103 to be described later. On the other hand, in the case of "Yes" in the above-described step S101, a first reception command division process illustrated in FIG. 4B is executed (step S102).
As illustrated in FIG. 4B, in the first reception command division process, the CPU 1d determines whether or not the reception command has been received from rewrite device A for development (whether or not the type of rewrite device communicably connected to its own device is rewrite device A for development) based on the received rewrite command (step S102a).

FIG. 5 is a diagram illustrating an example of data content of rewrite commands that are transmitted from rewrite device A for development and rewrite device B for market.
As illustrated in FIG. 5, the data content of the rewrite command transmitted from rewrite device A for development is different from the data content of the rewrite command transmitted from rewrite device B for market. Thereby, it is possible to determine a type of rewrite device (rewrite device A for development or rewrite device B for market) connected to the ECU 1 based on the reception command.

In FIG. 4B, in the case of "Yes" in the above-described step S102a, the CPU 1d ends the first reception command division process by discriminating (determining) that the rewrite device connected to its own device is rewrite device A for development (step S102b).
On the other hand, in the case of "No" in the above-described step S102a, the CPU 1d determines whether or not the reception command has been received from rewrite device B for market (whether or not a type of rewrite device connected to its own device is rewrite device B for market) based on the received rewrite command (step S102c).

In the case of "Yes" in the above-described step S102c, the CPU 1d ends the first reception command division process by discriminating (determining) that the rewrite device connected to its own device is rewrite device B for market (step S 102d). In the case of "No" in the above-described step S 102c, the CPU 1d directly ends the first reception command division process.

The CPU 1d returns to step S103 of FIG. 4A after ending the above-described first reception command division process, and determines whether or not the rewrite device connected to its own device is fixed to be rewrite device A for development (step S103).
In the case of "Yes" in step S103, the CPU 1d executes communication with rewrite device A for development (return of a response to the command or the like) and a process of rewriting a control program corresponding to the rewrite command using a communication protocol corresponding to rewrite device A for development (step S104).

In the case of "No" in the above-described step S103, the CPU 1d determines whether or not the rewrite device connected to its own device is fixed to be rewrite device B for market (step S105).
In the case of "Yes" in step S105, the CPU 1d executes communication with rewrite device B for market (return of a response to the command or the like) and a process of rewriting a control program corresponding to the rewrite command using a communication protocol corresponding to rewrite device B for market (step S106). On the other hand, in the case of "No" in the above-described step S105, the command determination process ends.
Every time the rewrite command is received via the communication I/F 1a, the CPU 1d executes the processes of the above-described steps S101 to S106.
As described above, there is provided a program rewrite method of rewriting a control program of the vehicle control device by transmitting a rewrite command from one of a plurality of types of external rewrite devices using different communication protocols to the vehicle control device, wherein the vehicle control device can determine a type of the external rewrite device communicably connected to its own device based on a rewrite command which a protocol has initially been determined, and then accept only a rewrite command from the determined external rewrite device.

As described above, according to the ECU 1 in accordance with this embodiment, it is possible to perform the determination of a type of rewrite device connected to its own device (the determination of a communication protocol) and then accept only a rewrite command from the determined external rewrite device. Accordingly, it is also possible to cope with the case in which any of rewrite device A for development and rewrite device B for market using different communication protocols is used.

As described above, according to the ECU 1 in accordance with this embodiment, it is possible to perform the determination of a type of rewrite device connected to its own device (the determination of a communication protocol). Accordingly, it is possible to cope with the case in which any of rewrite device A for development and rewrite device B for market using different communication protocols is used.

The present invention is not limited to the above-described embodiment, and the following modified examples may be included.
Although an example in which any of two types of external rewrite devices (rewrite device A for development and rewrite device B for market) using different communication protocols can be used has been assumed and described in the above-described embodiment, the present invention can also be applied to a situation in which three or more types of external rewrite devices using different communication protocols coexist.

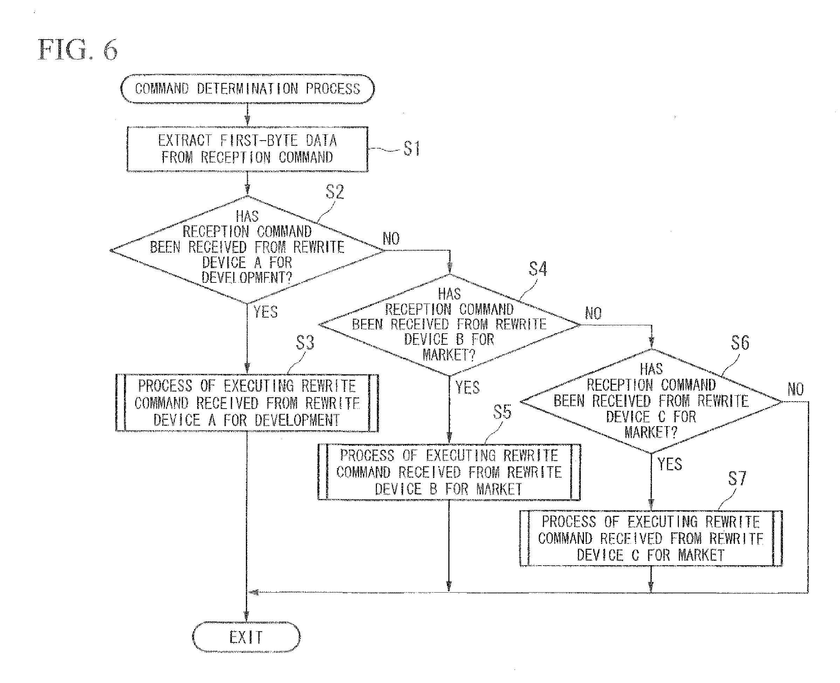

FIG. 6 is a flowchart illustrating a command determination process when the CPU 1d executes rewriting of the control program, for example, by assuming the case in which any of three types of external rewrite devices (rewrite device A for development and rewrite devices B and C for market) using different communication protocols can be used.
In FIG. 6, the same steps as in FIG. 2 are denoted by the same reference signs.

As illustrated in FIG. 6, in the situation in which any of the three types of external rewrite devices (rewrite device A for development and rewrite devices B and C for market) can be used, the CPU 1d determines whether or not a reception command has been received from rewrite device C for market (whether or not the type of rewrite device communicably connected to its own device is rewrite device C for market) in the case of "No" in step S4 (step S6).

In the case of "Yes" in step S6, that is, when it is determined that rewrite device C for market is connected to the ECU 1, the CPU 1d executes communication with rewrite device C for market (return of a response to the command or the like) and a process of rewriting a control program according to a rewrite command using a communication protocol corresponding to rewrite device C for market (step S7).
On the other hand, in the case of "No" in the above-described step S6, that is, when it is determined that a type of rewrite device communicably connected to its own device does not correspond to any of rewrite device A for development and rewrite devices B and C for market, the CPU 1d ends the command determination process without performing a process of rewriting the control program.

Likewise, although an example in which it is determined whether or not the reception command has been received from rewrite device A for development in step S2 of FIG. 6, it is determined whether or not the reception command has been received from rewrite device B for market in step S4, and it is determined whether or not the reception command has been received from rewrite device C for market in step S6 has been described in the above-described modified example, the content of these steps may be switched.

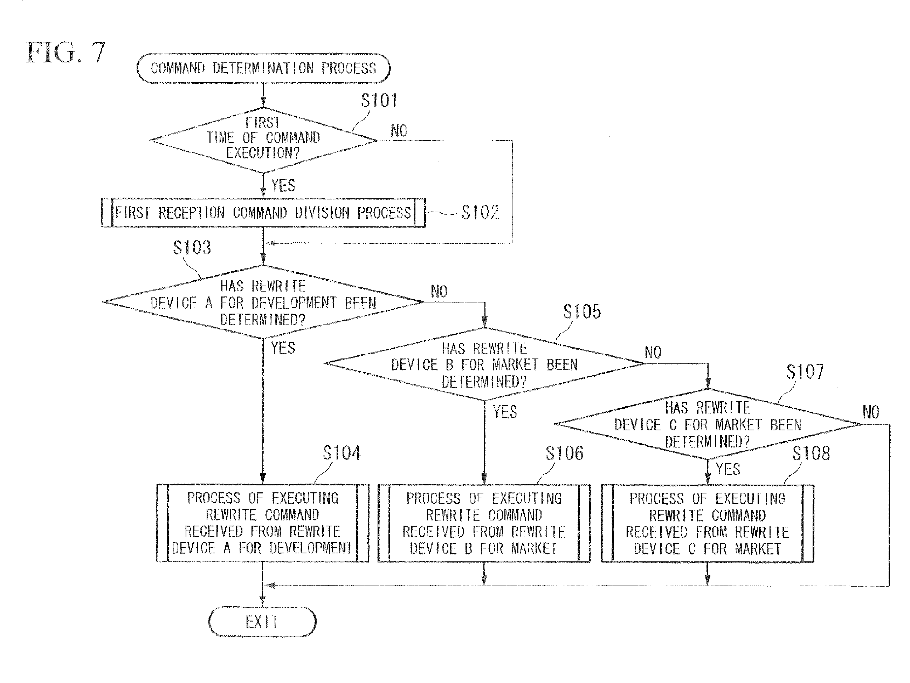

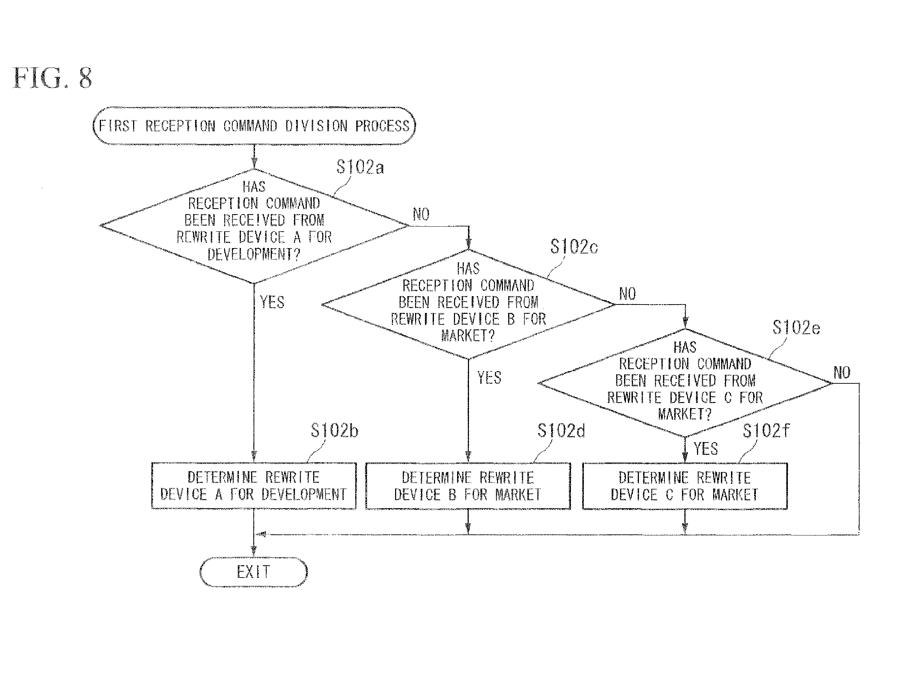

FIG. 7 is a flowchart illustrating a command determination process that is executed when the CPU 1d rewrites the control program, for example, under the assumption of a situation in which three types of external rewrite devices (rewrite device A for development and rewrite devices B and C for market) using different communication protocols coexist.
In addition, FIG. 8 is a flowchart illustrating a first reception command division process included in the command determination process of FIG. 7.
In FIGS. 7 and 8, the same steps as in FIGS. 4A and 4B are denoted by the same reference signs.

As illustrated in FIG. 7, in the situation in which rewrite device A for development and rewrite devices B and C for market coexist, the CPU 1d determines whether or not a rewrite device connected to its own device is fixed to be rewrite device C for market in the case of "No" in step S105 (step S107).
In the case of "Yes" in step S107, the CPU 1d executes communication with rewrite device C for market (return of a response to a command or the like) and a process of rewriting a control program according to a rewrite command using a communication protocol corresponding to rewrite device C for market (step S108). On the other hand, in the case of "No" in the above-described step S107, the CPU 1d ends the command determination process.

In addition, as illustrated in FIG. 8, in the first reception command division process, the CPU 1d determines whether or not the reception command has been received from rewrite device C for market (whether or not a type of rewrite device connected to its own device is rewrite device C for market) based on the received rewrite command in the case of "No" in step S102c (step S102e).
In the case of "Yes" in the above-described step S102e, the CPU 1d ends the first reception command division process by discriminating (determining) that the rewrite device connected to its own device is rewrite device C for market (step S102f). In the case of "No" in the above-described step S102e, the CPU 1d ends the first reception command division process as it is.

Although an example in which it is determined whether or not the rewrite device connected to its own device is fixed to be rewrite device A for development in step S103 of FIG. 4A and it is determined whether or not the rewrite device connected to its own device is fixed to be rewrite device B for market in step S105 has been described in the above-described embodiment related to FIGS. 4A and 4B, the content of these steps may be switched.
That is, it may be determined whether or not the rewrite device connected to its own device is fixed to be rewrite device B for market in step S103 of FIG. 4A, and it may be determined whether or not the rewrite device connected to its own device is fixed to be rewrite device A for development in step S15.
Of course, in this case, it is also necessary to switch the content of steps S104 and S106.

In addition, although an example in which it is determined whether or not the reception command has been received from rewrite device A for development in step S102a of FIG. 4B and it is determined whether or not the reception command has been received from rewrite device B for market in step S102c has been described, the content of these steps may be switched.
That is, it may be determined whether or not the reception command has been received from rewrite device B for market in step S 102a of FIG. 4B and it may be determined whether or not the reception command has been received from rewrite device A for development in step S102c.
Of course, in this case, it is also necessary to switch the content of steps S102b and S102d.

In addition, although an example in which it is determined whether or not the rewrite device connected to its own device is fixed to be rewrite device A for development in step S103 of FIG. 7, it is determined whether or not the rewrite device connected to its own device is fixed to be rewrite device B for market in step S105, and it is determined whether or not the rewrite device connected to its own device is fixed to be rewrite device C for market in step S107 has been described in the above-described modified example related to FIG. 7, the content of these steps may be switched.

In addition, although an example in which it is determined whether or not the reception command has been received from rewrite device A for development in step S102a of FIG. 8, it is determined whether or not the reception command has been received from rewrite device B for market in step S102c, and it is determined whether or not the reception command has been received from rewrite device C for market in step S102e has been described in the above-described modified example related to FIG. 8, the content of steps S102c and S102e may be switched.

### INDUSTRIAL APPLICABILITY

According to the present invention, it is possible to provide a vehicle control device and a program rewrite method, which can also cope with a situation in which a plurality of types of external rewrite devices using different communication protocols coexist.

### [Description of Reference Symbols]

- 1: ECU
- 1a: Communication I/F
- 1b: ROM
- 1c: RAM
- 1d: CPU
- A: Rewrite device for development (external rewrite device)
- B: Rewrite device for market (external rewrite device)

## Claims

1. A vehicle control device communicably connectable to a plurality of types of external rewrite devices using different communication protocols, comprising:
a storage unit configured to store a control program; and
a control unit configured to perform rewriting of the control program according to a rewrite command received from the external rewrite device communicably connected to its own device,
wherein, every time the rewrite command is received, the control unit determines a type of the external rewrite device communicably connected to its own device based on header information of the received rewrite command.

2. The vehicle control device according to claim 1, wherein:
the storage unit stores the communication protocol corresponding to each of the plurality of types of external rewrite devices, and
the control unit performs communication with the external rewrite device communicably connected to its own device and rewriting of the control program corresponding to the rewrite command using the communication protocol corresponding to the type of the external rewrite device determined based on the header information of the rewrite command among the communication protocols stored in the storage unit.

3. A program rewrite method of rewriting a control program of a vehicle control device by transmitting a rewrite command from one of a plurality of types of external rewrite devices using different communication protocols to the vehicle control device,
wherein, every time the rewrite command is received, the vehicle control device determines a type of the external rewrite device communicably connected to its own device based on header information of the received rewrite command.

4. The program rewrite method according to claim 3, wherein the vehicle control device
stores the communication protocol corresponding to each of the plurality of types of external rewrite devices, and
performs communication with the external rewrite device communicably connected to its own device and rewriting of the control program corresponding to the rewrite command using the communication protocol corresponding to the type of the external rewrite device determined based on the header information of the rewrite command.

5. A vehicle control device communicably connectable to a plurality of types of external rewrite devices using different communication protocols, comprising:
a storage unit configured to store a control program; and
a control unit configured to perform rewriting of the control program according to a rewrite command received from the external rewrite device communicably connected to its own device,
wherein the control unit determines a type of the external rewrite device communicably connected to its own device based on a rewrite command which a protocol has initially been determined, and then accepts only a rewrite command from the determined external rewrite device.

6. The vehicle control device according to claim 5, wherein:
the storage unit stores the communication protocol corresponding to each of the plurality of types of external rewrite devices, and
the control unit performs communication with the external rewrite device communicably connected to its own device and rewriting of the control program corresponding to the rewrite command using the communication protocol corresponding to the type of the external rewrite device determined based on the rewrite command which the protocol has initially been determined among the communication protocols stored in the storage unit.

7. A program rewrite method of rewriting a control program of a vehicle control device by transmitting a rewrite command from one of a plurality of types of external rewrite devices using different communication protocols to the vehicle control device,
wherein the vehicle control device determines a type of the external rewrite device communicably connected to its own device based on a rewrite command which a protocol has initially been determined, and then accepts only a rewrite command from the determined external rewrite device.

8. The program rewrite method according to claim 7, wherein the vehicle control device
stores the communication protocol corresponding to each of the plurality of types of external rewrite devices, and
further performs communication with the external rewrite device communicably connected to its own device and rewriting of the control program corresponding to the rewrite command using the communication protocol corresponding to the type of the external rewrite device determined based on the rewrite command which the protocol has initially been determined.
